# EUROPÄISCHE PATENTSCHRIFT

(11) **EP 3 452 670 B1**
(45) Veröffentlichungstag und Bekanntmachung des Hinweises auf die Patenterteilung: **30.06.2021**
(21) Anmeldenummer: 17720841.0
(22) Anmeldetag: 08.05.2017
(51) Int. Cl.: E04C 2/12, B32B 21/00, B32B 21/13, B32B 21/14, B32B 1/00, B32B 3/28, E04C 2/16, E04C 2/32, E04B 1/74, E04B 2/34, E04C 2/34, B32B 7/12

(54) **MEHRSCHICHTVERBUND AUFWEISEND WELLENFÖRMIG AUSGEBILDETE HOLZELEMENTE**
COMPOSITE MULTILAYER STRUCTURE COMPRISING A CORRUGATED WOODEN ELEMENT
COMPOSITE MULTICOUCHE COMPRENANT DES ELEMENTS EN BOIS ONDULES

(30) Priorität: 06.05.2016 EP 16001036
(43) Veröffentlichungstag der Anmeldung: 13.03.2019
(73) Patentinhaber: Wood Innovations Ltd., 9492 Eschen (LI)
(72) Erfinder: MÖLLER, Achim, 01157 Dresden (DE); ECKSTEIN, Thomas, 01159 Dresden (DE); DANZER, Hans-Joachim, 97492 Eschen (LI)
(74) Vertreter: Ricker, Mathias
(86) Internationale Anmeldenummer: PCT/EP2017/060929
(87) Internationale Veröffentlichungsnummer: WO 2017/191326

(56) Entgegenhaltungen:
- EP-A1- 2 660 408
- EP-A1- 2 873 522
- WO-A1-99/63180

## Beschreibung

### GEBIET DER ERFINDUNG

Die vorliegende Erfindung betrifft eine Kernschicht, welche wellenförmig ausgebildete Holzelemente aufweist, welche zur Herstellung eines Mehrschichtverbunds geeignet ist, vorzugsweise zur Herstellung einer Leichtbauplatte, sowie einen Mehrschichtverbund, welcher die Kernschicht aufweist. Die Erfindung betrifft ferner Verfahren zur Herstellung der Kernschicht und des Mehrschichtverbunds sowie deren Verwendung.

### HINTERGRUND DER ERFINDUNG

Es ist bekannt, Mehrschichtverbünde auf Basis Holz beispielsweise in Form von Leichtbauplatten zu verwenden.

CH 254025 offenbart einen Mehrschichtverbund, der zwei Deckplatten aufweist und eine Kernschicht dazwischen, wobei die Kernschicht mindestens eine Schicht gefalteten Furniers aufweist.

DE 42 01 201 offenbart Halbzeug oder Fertigprodukt aus Holz, welche aus plättchenförmigen Flächenelementen hergestellt sind. Die plättchenförmigen Elemente können zick-zack-förmig ausgebildet sein. Sie können in regelloser Verteilung zusammen mit Flächenelementen oder vorliegen oder sich schuppenförmig überlagern.

DE 10 2008 022 806 offenbart eine Leichtbauplatte mit einer wellenförmigen Holzfurnierschicht. Die Wellen können zick-zack-förmig ausgebildet sein.

BE 547 811 offenbart eine Kernschicht bestehend aus zwei zick-zack-förmig ausgebildeten Holzelementen, welche zwischen zwei Deckschichten angeordnet sind.

DE 10 2008 022805 A1 offenbart eine Wellfurnierplatte und daraus aufgebaute Leichtbauplatten. Die Wellenstruktur der verwendeten Holzelemente kann zick-zack-förmig, Sinus-förmig und Trapez-förmig sein. Die Holzelemente sind ineinander gestapelt.

EP 1 923 209 offenbart eine Leichtbau-Verbundplatte mit Außenlagen und einer Mittellage, wobei die Mittellage in einem Winkel zur Ebene der Leichtbau-Verbundplatte angeordnet ist.

Diesen Mehrschichtverbunden aus dem Stand der Technik ist gemeinsam, dass die Kernschicht eine aufgelockerte Struktur aufweisen kann. Bei Krafteinwirkung senkrecht zur Oberfläche des Mehrschichtverbunds weist dieser eine dämpfende Wirkung auf, da sich die Kernschicht zumindest teilweise komprimieren lässt.

Diese Mehrschichtverbünde erfordern häufig den Einsatz qualitativ hochwertiger Ausgangsprodukte, da Fehlstellen im Ausgangsmaterial nicht oder nur in geringem Maße toleriert werden können. Neben den hohen Rohmaterialqualitäten sind auch sehr hohe Qualitäten der Wellenbahnen gefordert, da bei der Herstellung der Kernschicht i. A. nur mit relativ geringem Druck der Zusammenhalt der einzelnen Schichten sichergestellt werden kann. Der geringe Druck beim Verpressen führt aber zu einer geringen Maßhaltigkeit der erhaltenen Kernschicht. Die Ausbildung von Hohlräumen wirkt sich zwar günstig auf das Verhältnis Gewicht zu Stabilität aus, kann jedoch auch zu einer beeinträchtigten Bearbeitbarkeit der Kernschicht hinsichtlich der Bohrbearbeitung wie auch der Einbringung sowie des Haltevermögens von standardisierten Beschlägen führen, wenn beispielsweise Nägel oder Schrauben auf Hohlräume treffen.

Ein verbessertes Haltevermögen von Beschlägen einer Kernschicht wird in der EP 2 660 408 offenbart. Dieses Dokument offenbart eine Kernschicht, welche für einen Mehrschichtverbund geeignet ist, der mindestens eine Deckschicht und eine Kernschicht aufweist, wobei die Deckschicht so angeordnet ist, dass sie die Kernschicht zumindest teilweise bedeckt und mit dieser in fester Verbindung steht, wobei die Kernschicht zick-zack-förmig ausgebildete Elemente aus Holz aufweist, welche plättchenförmige Bereiche aufweisen, die zick-zack-förmig angeordnet sind, wobei ein zick-Bereich eines Elements mit einem angrenzenden zack-Bereich des zick-zack-förmig ausgebildeten Elements eine gemeinsame Kante zwischen sich ausbilden, und wobei zick-zack-förmig ausgebildete Elemente in der Kernschicht so angeordnet sind, dass zwei derartige Kanten zweier zick-zack-förmig ausgebildeter Elemente, die gleich oder verschieden voneinander sein können, sich in einem Winkel überkreuzen, der verschieden von Null ist, wobei die zwei Elemente an der Überkreuzungsstelle fest miteinander verbunden sind.

WO 2015/067362 offenbart eine Kernschicht, welche zick-zack-förmig ausgebildete Holzelemente aufweist, vorzugsweise Holzelemente mit Wellenstruktur, welche zur Herstellung eines Mehrschichtverbunds oder in einem Mehrschichtverbund geeignet ist, vorzugsweise zur Herstellung einer Leichtbauplatte, sowie einen Mehrschichtverbund, welcher die Kernschicht aufweist.

Eine Kernschicht aufweisend wellenförmige Holzelemente ist auch in der WO 2015/149942 offenbart.

Durch ein regelloses Streuen wellenartiger Partikel stellen die drei zuletzt genannten Dokumente Kernschichten bereit, welche gegenüber dem oben erwähnten Stand der Technik die Herstellung einer leichten, tragfähigen Kernschicht bzw. Leichtbauplatte aus wesentlich geringeren Rohmaterialqualitäten ermöglichen. Eine gute Bearbeitung der Leichtbauplatte, auch in Bezug auf das Einbringen von standardisierten Beschlägen, wird mit diesen Kernschichten erreicht.

WO 99/63180 offenbart ein plattenförmiges Holzbauelement aus wenigstens zwei miteinander verleimten Lagen. Zumindest eine der Lagen besteht aus einer gewellten Holzschicht, die wenigstens auf einer Seite eine auf die Wellenrücken aufgeleimte weitere Lage trägt.

EP 2 873 522 offenbart eine Verbundplatte, aufweisend eine Mittellage mit jeweils einer darüber und darunter angeordneten Deckschicht aus Holzwerkstoff, wobei die Mittellage wellenförmige Lamellen aufweist.

### AUFGABE DER ERFINDUNG

Eine Aufgabe der vorliegenden Erfindung besteht darin, eine Kernschicht und einen Mehrschichtverbund in Form einer Leichtbauplatte enthaltend die Kernschicht bereit zu stellen, welcher bei gleicher Dichte wie herkömmliche Mehrschichtverbünde eine verbesserte Stabilität bzw. bei erniedrigter Dichte eine vergleichbare Stabilität zu herkömmlichen Leichtbauplatten aufweist.

### ZUSAMMENFASSUNG DER ERFINDUNG

Diese Aufgabe wird erfindungsgemäß gelöst mit einer Kernschicht, welche für einen Mehrschichtverbund geeignet ist, der mindestens eine Deckschicht und die Kernschicht aufweist, wobei die Deckschicht so angeordnet ist, dass sie die Kernschicht zumindest teilweise bedeckt und mit dieser in fester Verbindung steht, und dem Mehrschichtverbund aufweisend die Kernschicht, wobei die Kernschicht Schichten mit wellenförmig ausgebildeten Holzelementen aufweist, wobei in mindestens einer Schicht die wellenförmig ausgebildeten Holzelemente orientiert angeordnet sind.

Insbesondere betrifft die Erfindung eine Kernschicht, wie sie in den folgenden Punkten definiert ist:
1. Kernschicht, welche mindestens aufweist:
   eine Schicht aufweisend übereinander angeordnete wellenförmig ausgebildete Holzelemente, wobei die Holzelemente sich in einer Richtung erstrecken;
   wobei die wellenförmig ausgebildeten Holzelemente in der Schicht orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen; und wobei zumindest ein Teil der Holzelemente in der Schicht so angeordnet ist, dass diese Holzelemente zwischen sich Hohlräume ausbilden.
2. Kernschicht, welche mindestens aufweist:
   eine erste Schicht aufweisend übereinander angeordnete wellenförmig ausgebildete erste Holzelemente, wobei die ersten Holzelemente sich in einer ersten Richtung erstrecken; und
   eine zweite Schicht aufweisend übereinander angeordnete wellenförmig ausgebildete zweite Holzelemente, wobei die zweiten Holzelemente sich in einer zweiten Richtung erstrecken;
   wobei die erste und die zweite Schicht übereinander angeordnet sind und einander berühren;
   wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen, und wobei zumindest ein Teil der ersten Holzelemente in der ersten Schicht so angeordnet ist, dass diese Holzelemente zwischen sich Hohlräume ausbilden;
   wobei wellenförmig ausgebildete zweite Holzelemente in der zweiten Schicht orientiert angeordnet sind, derart, dass Wellentäler übereinander liegender zweiter Holzelemente ineinander greifen, oder dass Wellenberge übereinander liegender zweiter Holzelemente ineinander greifen, oder dass Wellentäler übereinander liegender zweiter Holzelemente ineinander greifen und Wellenberge übereinander liegender zweiter Holzelemente ineinander greifen, und wobei zumindest ein Teil der zweiten Holzelemente in der zweiten Schicht so angeordnet ist, dass diese Holzelemente zwischen sich Hohlräume ausbilden;
   wobei die erste und die zweite Richtung voneinander verschieden sind.
3. Kernschicht, welche mindestens aufweist:
   eine erste Schicht aufweisend übereinander angeordnete wellenförmig ausgebildete erste Holzelemente, wobei die ersten Holzelemente sich in einer ersten Richtung erstrecken; und
   eine zweite Schicht aufweisend übereinander angeordnete wellenförmig ausgebildete zweite Holzelemente;
   wobei die erste und die zweite Schicht übereinander angeordnet sind und einander berühren;
   wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen, und wobei zumindest ein Teil der ersten Holzelemente in der ersten Schicht so angeordnet ist, dass diese Holzelemente zwischen sich Hohlräume ausbilden;
   wobei wellenförmig ausgebildete zweite Holzelemente in der zweiten Schicht regellos angeordnet sind.
4. Kernschicht nach Punkt 2 oder 3, aufweisend eine dritte Schicht aufweisend übereinander liegende wellenförmig ausgebildete dritte Holzelemente.
5. Kernschicht nach Punkt 3 und 4, wobei die erste Schicht und die dritte Schicht die zweite Schicht Sandwich-artig umgeben, wobei in der dritten Schicht wellenförmig ausgebildete dritte Holzelemente sich in einer dritten Richtung erstrecken, und wobei die dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen, und wobei zumindest ein Teil der dritten Holzelemente in der dritten Schicht so angeordnet ist, dass diese Holzelemente zwischen sich Hohlräume ausbilden; wobei die erste Richtung gleich der dritten Richtung ist oder von dieser verschieden ist.
6. Kernschicht nach Punkt 3 und 4, wobei die zweite Schicht und die dritte Schicht die erste Schicht Sandwich-artig umgeben, wobei wellenförmig ausgebildete dritte Holzelemente in der dritten Schicht regellos angeordnet sind.
7. Kernschicht nach Punkt 2 und 4, wobei die erste und die dritte Schicht die zweite Schicht Sandwich-artig umgeben, wobei wellenförmig ausgebildete dritte Holzelemente in der dritten Schicht regellos angeordnet sind.
8. Kernschicht nach Punkt 2 und 4, wobei die erste und die dritte Schicht die zweite Schicht Sandwich-artig umgeben, wobei wellenförmig ausgebildete dritte Holzelemente in der dritten Schicht sich in einer dritten Richtung erstrecken, wobei die dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen, und wobei zumindest ein Teil der dritten Holzelemente in der dritten Schicht so angeordnet ist, dass diese Holzelemente zwischen sich Hohlräume ausbilden; wobei die zweite Richtung und die dritte Richtung voneinander verschieden sind.
9. Kernschicht, welche mindestens aufweist:
   eine erste Schicht aufweisend lediglich ein erstes wellenförmig ausgebildetes Holzelement, welches sich in einer ersten Richtung erstreckt; und
   eine zweite Schicht aufweisend lediglich ein zweites wellenförmig ausgebildetes Holzelement, welches sich in einer zweiten Richtung erstreckt;
   wobei die erste und die zweite Schicht übereinander angeordnet sind und einander berühren;
   wobei die erste und die zweite Richtung voneinander verschieden sind; und
   wobei die wellenförmig ausgebildeten Holzelemente OSB-Strands oder ein Strand-förmiges Material aufweisen oder aus diesem bestehen.
10. Kernschicht nach einem der vorstehenden Punkte, wobei wellenförmig ausgebildete erste, zweite und/oder dritte Holzelemente Fasern mit einer Vorzugsrichtung aufweisen.
11. Kernschicht nach Punkt 10, wobei die Vorzugsrichtung der Fasern gleich der Erstreckungsrichtung des ersten, zweiten und/oder dritten Holzelements ist.
12. Kernschicht nach einem der Punkte 10 oder 11, wobei die Kanten des ersten, zweiten und/oder dritten Holzelements nicht parallel zur Vorzugsrichtung verlaufen; oder wobei die Kanten des ersten, zweiten und/oder dritten Holzelements senkrecht zur Vorzugsrichtung verlaufen.
13. Kernschicht nach einem der vorstehenden Punkte 1-8 und 10-12, wobei wellenförmig ausgebildete Holzelemente ein Furnier oder OSB-Strands oder ein Strand-förmiges Material aufweisen oder aus diesen bestehen.
14. Mehrschichtverbund, mindestens aufweisend eine Deckschicht und eine Kernschicht, wobei die Deckschicht so angeordnet ist, dass sie die Kernschicht zumindest teilweise bedeckt und mit dieser in fester Verbindung steht, wobei die Kernschicht eine Kernschicht ist wie in einem der Punkte 1 bis 13 definiert, vorzugsweise wobei die Deckschicht ein Material aufweist ausgewählt aus: Furnier, Holzplatte, Spanplatte, Faserplatte, Sperrholzplatte, Kunststoffplatte, Gipskarton, Blech, Faserzementplatte, Papier oder Pappe, und aus zwei oder mehr davon.
15. Verfahren zur Herstellung eines Mehrschichtverbunds aufweisend eine Kernschicht nach Punkten 1-8, 10-12 oder 13 und mindestens eine Deckschicht, aufweisend die Stufen (A), (B), die Stufe (D) und optional die Stufe (C):
   (A) Streuen von OSB-Strands oder eines Strand-förmigen Materials unter Bildung einer ersten Schicht mittels einer Streuvorrichtung, welche so konfiguriert ist, dass in der ersten Schicht die OSB-Strands oder das Strand-förmige Material regellos angeordnet sind;
   (B) Aufbringen einer zweiten Schicht auf die erste Schicht durch Streuen von wellenförmigen Holzelementen mittels einer Streuvorrichtung, welche so ausgebildet ist, dass die Holzelemente so gestreut werden können, dass sie sich in einer Richtung erstrecken, wobei die wellenförmig ausgebildeten Holzelemente orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen, und wobei zumindest ein Teil der Holzelemente in der zweiten Schicht so angeordnet ist, dass diese Holzelemente zwischen sich Hohlräume ausbilden; und optional
   (C) Aufbringen einer dritten Schicht auf die zweite Schicht durch Streuen von OSB-Strands oder eines Strand-förmigen Materials mittels einer Streuvorrichtung, welche so ausgebildet ist, dass in der dritten Schicht die OSB-Strands oder das Strand-förmige Material regellos angeordnet ist; und
   (D) Verpressen der in den Stufen (A), (B) und der optionalen Stufe (C) gebildeten Schichten, wobei einander berührende OSB-Strands oder Strand-förmiges Material und wellenförmige Holzelemente jeweils mittels eines Klebers fest miteinander verbunden werden.
16. Verformte Kernschicht, herstellbar nach einem Verfahren, welches zumindest die Stufe (X) aufweist:
   (X) Druckverformen der Kernschicht nach einem der Punkte 1 bis 13;
      oder
      verformter Mehrschichtverbund, mindestens aufweisend eine Deckschicht und eine Kernschicht, wobei die Deckschicht so angeordnet ist, dass sie die Kernschicht zumindest teilweise bedeckt und mit dieser in fester Verbindung steht, herstellbar nach einem Verfahren, welches zumindest die Stufe (Y) aufweist:
   (Y) Druckverformen des Mehrschichtverbunds nach Punkt 14 oder des Mehrschichtverbunds hergestellt nach Punkt 15.
17. Verwendung
   einer Kernschicht nach einem der Punkte 1 bis 13;
   oder eines Mehrschichtverbunds nach Punkt 14 oder hergestellt nach Punkt 15;
   oder einer verformten Kernschicht oder eines verformten Mehrschichtverbunds nach Punkt 16;
   bei der Möbelherstellung, für Regale, für Verpackungen für den Transport, für Innenausbauten, in Türen und Toren, sowie im Fahrzeug- und Schiffsbau.

Vorteilhafterweise weist die erfindungsgemäße Kernschicht bei schichtenweisem Aufbau bei sehr geringem Materialeinsatz auf Grund der kreuzweisen Verklebung der einzelnen Schichten der Kernschicht eine sehr hohe Festigkeit auf. Dabei kann bei reduzierter Dichte gegenüber der regellosen Streuung mindestens die gleiche Stabilität bzw. bei gleicher Dichte eine erhöhte Festigkeit erreicht werden. Eine gute Bearbeitung der erfindungsgemäßen Leichtbauplatten, auch in Bezug auf das Einbringen von standardisierten Beschlägen, wird gleichfalls erzielt.

Durch die vorhandenen Hohlräume entsteht eine vorteilhaft aufgelockerte Struktur, wobei die Struktur durch das Ineinandergreifen von Wellenbergen bzw. Wellentälern gleichzeitig eine hohe Festigkeit erhält. Dies bedeutet, dass trotz der erniedrigten Dichte eine hohe Stabilität gewährleistet ist. Dies ist besonders vorteilhaft.

### DETAILLIERTE BESCHREIBUNG DER ERFINDUNG

Die nachfolgend verwendeten Begriffe in Anführungs- und Schlusszeichen sind im Sinne der Erfindung definiert.

### Erster Aspekt der Erfindung:

### Erfindungsgemäße Kernschicht aufweisend Schichten wellenförmig ausgebildeter erster, zweiter und/oder dritter Holzelemente

Die Erfindung betrifft in einer Ausführungsform eine Kernschicht, wobei die Kernschicht Schichten, das heißt einzelne Schichten, mit wellenförmig ausgebildeten Holzelementen aufweist, wobei in mindestens einer Schicht die wellenförmig ausgebildeten Holzelemente orientiert angeordnet sind.

Holzelemente der ersten (einzelnen) Schicht werden dabei als erste Holzelemente bezeichnet, der zweiten (einzelnen) Schicht als zweite Holzelemente, usw. Die Anzahl der Holzelemente in den einzelnen Schichten kann gleich oder verschieden voneinander sein.

Der Begriff *"Kernschicht"* bedeutet eine Kernschicht, welche zur Herstellung eines Mehrschichtverbunds geeignet ist, oder welche in einem Mehrschichtverbund vorliegen kann. Erfindungsgemäß weist die Kernschicht Elemente aus Holz auf, welche wellenförmig ausgebildet sind.

Der Begriff *"Holzelement"* bedeutet ein Bauteil oder eine Komponente der erfindungsgemäßen Kernschicht oder des erfindungsgemäßen Mehrschichtverbunds in Form einer Leichtbauplatte. Im Folgenden wird dieses Element auch als Leichtbauplattenelement bezeichnet.

In ihrer breitesten Bedeutung beschreiben die Begriffe *"Welle"* oder *"Wellenstruktur"* oder *"wellenförmig"* oder *"wellenartig"* mindestens einen Wellenberg und ein Wellental in der Welle. Somit weist die Welle im mathematischen Sinn mindestens eine positive und negative Halbwelle auf.

Der Begriff *"Welle"* im Holzelement wird im physikalischen Sinn durch eine sich räumlich ausdehnende Schwingung veranschaulicht. Die Richtung der sich räumlich ausbreitenden Welle definiert dabei die Richtung, in der sich das Holzelement erstreckt. Die verwendeten Begriffe schließen auch sich wiederholende wellenförmige Struktureinheiten im Element ein.

Die Welle kann im mathematischen Sinn durch die Elongation der Schwingung, durch die Amplitude der Schwingung wie auch durch die Schwingungsebene der positiven oder negativen Halbwelle, d.h. des Wellenbergs und des Wellentals, charakterisiert werden. Eine Charakterisierung über die Wellenlänge, also über die Länge eines Wellenbergs und des sich daran anschließenden Wellentals ist gleichfalls möglich. Der Übergang zwischen einem Wellenberg und einem Wellental kann - in Abhängigkeit von der Form der Welle - durch einen Wendepunkt im wellenförmigen Verlauf wie auch durch einen geraden Abschnitt charakterisiert werden.

Die Welle kann bezüglich ihrer Amplitude oder Wellenlänge oder Amplitude und Wellenlänge variiert werden. Dadurch kann die Dicke der Kernschicht in der Leichtbauplatte ebenso beeinflusst werden wie ihre Steifigkeit. Andererseits ist es auch möglich, die Steifigkeit der Leichtbauplatte über Plattenparameter wie die Wellenhöhe oder die Dicke des wellenförmigen oder wellenartigen Elements in der Leichtbauplatte, der Span- und Fasergeometrie im Element, der Verdichtung der Elemente in der Platte wie auch des Verleimungsgrads der Elemente untereinander und mit den Deckschichten der Platte beeinflusst werden.

Die Form der Welle kann dabei jegliche erdenkliche Struktur annehmen.

In einer Ausführungsform ist die Welle in Form einer Sinus-Funktion oder einer Funktion ausgebildet, welche ähnlich einer Sinus-Funktion ist, d.h. sie liegt in Form einer Sinus-Funktion dar und/oder ist sinusoid. Im Folgenden werden die Begriffe *"sinusfärmig"* oder *"sinusoid"* synonym verwendet.

In einer weiteren Ausführungsform ist die Welle in Form einer Dreieckschwingung ausgebildet. Der Begriff *"Dreieckschwingung"* umfasst auch den Begriff *"dreieckähnliche Schwingung".*

In einer weiteren Ausführungsform ist die Welle in Form einer Sägezahnschwingung ausgebildet. Eine derartige Schwingung kann auch als Kippschwingung bezeichnet werden.

In einer weiteren Ausführungsform ist die Welle in Form einer Rechteckschwingung ausgebildet.

Die genannten Wellenformen sind in der Physik bekannt und können auch mathematisch beschrieben werden.

In einer weiteren Ausführungsform weist die Welle unterschiedliche Wellenformen auf, d.h. mindestens zwei, oder drei oder vier Wellenformen ausgewählt aus: Dreieckschwingung, sinusoide Schwingung, Sägezahnschwingung oder Rechteckschwingung.

In einer Ausführungsform können diese Wellen in beliebiger Reihenfolge im wellenförmigen Element entlang einer gemeinsamen Ausbreitungsrichtung angeordnet sein.

In einer weiteren Ausführungsform können sich auch zwei oder mehr der vorstehend genannten Schwingungsarten in einer gemeinsamen Ausbreitungsrichtung überlagern und eine entsprechend neue Wellenform ausbilden.

Durch geeignete Überlagerung kann beispielweise eine trapezförmige Schwingung entstehen.

Die Wellenform im wellenförmigen Element kann auch damit beschrieben werden, dass das wellenförmig ausgebildete Holzelement in Form eines Leichtbauplattenelements plättchenförmige Bereiche aufweist, wobei ein plättchenförmiger Bereich im wellenförmig ausgebildetenen Element mit einem angrenzenden plättchenförmigen Bereich im wellenförmig ausgebildeten Element eine gemeinsame Kante zwischen sich ausbildet, derart, dass das Element wellenförmig ausgebildet ist. Somit bilden die plättchenförmigen Bereiche einschließlich der Kante eine Welle aus.

Der Begriff *"plättchenförmige Bereiche"* schließt Bereiche ein, die in Form von Flächen ausgebildet sind. Die Flächen können eben, d.h. plan, oder auch uneben sein, d.h. nicht plan, vorzugsweise dann gekrümmt, vorzugsweise konvex oder konkav, oder gewellt.

Der Begriff *"Kante"* schließt Begriffe wie *"Übergangsbereich zwischen zwei benachbarten plättchenförmigen Bereichen"* ein. Dieser Übergangsbereich kann eine Kante sein, welche scharf ausgeprägt ist. Der Begriff schließt auch eine Kante ein, welche wie eine gekrümmte Fläche oder wie eine plane (ebene) Fläche ausgestaltet ist. Somit schließt der Begriff *"Kante"* eine scharfe Kante in Form einer Linie wie auch eine wellige oder gewellte Kante in der Form einer kurvenförmigen Ebene oder einen gekrümmten Bereich zwischen zwei plättchenförmigen Bereichen ein. Somit bilden die plättchenförmigen Bereiche im wellenförmig ausgebildeten Element eine wellenförmige Struktur aus, d.h. einem Wellental folgt ein Wellenberg und umgekehrt.

Der Begriff *"gekrümmt ausgebildete Fläche"* bedeutet eine konvex ausgebildete Fläche oder eine konkav ausgebildete Fläche oder eine Fläche, die sowohl einen konvexen wie auch konkaven Anteil aufweist. Insbesondere bedeutet der Begriff *"gekrümmt"* auch *"kontinuierlich gekrümmt.*

Eine Kante verläuft somit auf einem Wellenberg oder in einem Wellental. Eine Kante wird demzufolge von einem Wellenberg oder einem Wellental gebildet.

Vorzugsweise sind Kanten, welche von benachbarten plättchenförmigen Bereichen im wellenförmigen Element gebildet werden, parallel zueinander ausgerichtet.

Somit wird auch ein wellenförmiges Elemente offenbart, welches plättchenförmige Bereiche aufweist, wobei ein plättchenförmiger Bereich im wellenförmigen Element mit einem angrenzenden plättchenförmigen Bereich im wellenförmigen Element eine gemeinsame Kante zwischen sich ausbildet, derart, dass das Element wellenförmig ausgebildet ist, wobei
(a) die plättchenförmigen Bereiche plane Flächen sind und die zwischen den planen Flächen ausgebildete Kante eine Linie ist. Eine derartige Welle kann als zick-zack-Welle beschrieben werden; oder
(b) die plättchenförmigen Bereiche plane Flächen sind und die zwischen den planen Flächen ausgebildete Kante eine gekrümmte Fläche ist; oder
(c) die plättchenförmigen Bereiche plane Flächen sind und die zwischen den planen Flächen ausgebildete Kante ein plane Fläche ist; oder
(d) die plättchenförmigen Bereiche gekrümmt ausgebildete Flächen sind und die zwischen den gekrümmten Flächen ausgebildete Kante eine gekrümmt ausgebildete Fläche ist, vorzugsweise eine konvex ausgebildete Fläche; oder
(e) die plättchenförmigen Bereiche gekrümmt ausgebildete Flächen sind und die zwischen den gekrümmten Flächen ausgebildete Kante geradenförmig ist; oder
(f) die plättchenförmigen Bereiche gekrümmt ausgebildete Flächen sind und die zwischen den gekrümmten Flächen ausgebildete Kante eine plan ausgebildete Fläche ist.

In einer Ausführungsform weist die Welle mindestens eine oder zwei oder drei oder vier oder fünf oder sechs der Wellenformen (a) bis (f) auf.

In einer Ausführungsform wird das Element gebildet aus
(c') einem Element (c), derart, dass die Welle im Längsschnitt gesehen sich wiederholende Einheiten in Form eines Trapezes aufweist; oder
(d') Elementen (d), derart, dass die Welle im Längsschnitt gesehen sich wiederholende Einheiten in Form einer Sinus-Funktion oder einer sinusoiden Funktion aufweist.

Die gute Druck- und Schubfestigkeit und -steifigkeit der Elemente (a) bis (f) bzw. einer Kernschicht enthaltend diese Elemente oder eines Mehrschichtverbunds enthaltend die Kernschicht lässt sich noch deutlich verbessern, wenn die Kernschicht insbesondere Elemente (d') enthält oder aus diesen Elementen besteht.

Derartige Wellenformen sind bekannt und sind in der EP 2 660 408 A1, der WO 2015/067362 und der WO 2015/149942 beschrieben. Zur weiteren Erläuterung wird deshalb ausdrücklich auf diese Dokumente hingewiesen. Auch weitere wellenförmige Holzelemente, die aus dem weiteren eingangs erwähnten Stand der Technik bekannt sind, können, gegebenenfalls nach Zerkleinerung, als Ausgangsprodukte für die erfindungsgemäße Kernschicht verwendet werden.

Insbesondere betrifft die Erfindung eine Kernschicht, welche mindestens aufweist:
eine erste Schicht aufweisend übereinander angeordnete wellenförmig ausgebildete erste Holzelemente, wobei die ersten Holzelemente sich in einer ersten Richtung erstrecken; und
eine zweite Schicht aufweisend übereinander angeordnete wellenförmig ausgebildete zweite Holzelemente, wobei die zweiten Holzelemente sich in einer zweiten Richtung erstrecken;
wobei die erste und die zweite Schicht übereinander angeordnet sind und einander berühren;
wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen;
wobei wellenförmig ausgebildete zweite Holzelemente in der zweiten Schicht orientiert angeordnet sind, derart, dass Wellentäler übereinander liegender zweiter Holzelemente ineinander greifen, oder dass Wellenberge übereinander liegender zweiter Holzelemente ineinander greifen, oder dass Wellentäler übereinander liegender zweiter Holzelemente ineinander greifen und Wellenberge übereinander liegender zweiter Holzelemente ineinander greifen;
wobei die erste und die zweite Richtung voneinander verschieden sind.

Somit bedeutet der Begriff *"orientiert",* dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen.

Der Begriff *"orientiert"* schließt in einer bevorzugten Ausführungsform ein, dass übereinander liegende Holzelemente zumindest teilweise Hohlräume zwischen sich ausbilden. Beispielsweise können drei übereinander liegende Holzelemente so angeordnet sein, dass sie sich nur teilweise überlappen, derart, dass im Überlappungsbereich der drei Holzelemente jeweils Wellenberge bzw. Wellentäler ineinander greifen, wobei dann zwischen dem oberen und dem unteren Holzelement, die das weitere Holzelement Sandwich-artig umgeben, ein Hohlraum ausgebildet wird. Somit werden in der ersten Schicht zwischen ersten Holzelementen Hohlräume gebildet.

Demzufolge betrifft die Erfindung auch eine Kernschicht, welche aufweist:
eine erste Schicht aufweisend übereinander angeordnete wellenförmig ausgebildete erste Holzelemente, wobei die ersten Holzelemente sich in einer ersten Richtung erstrecken; und
eine zweite Schicht aufweisend übereinander angeordnete wellenförmig ausgebildete zweite Holzelemente, wobei die zweiten Holzelemente sich in einer zweiten Richtung erstrecken;
wobei die erste und die zweite Schicht übereinander angeordnet sind und einander berühren;
wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen, und wobei erste Holzelemente in der ersten Schicht so angeordnet sind, dass diese Holzelemente zwischen sich Hohlräume ausbilden;
wobei wellenförmig ausgebildete zweite Holzelemente in der zweiten Schicht orientiert angeordnet sind, derart, dass Wellentäler übereinander liegender zweiter Holzelemente ineinander greifen, oder dass Wellenberge übereinander liegender zweiter Holzelemente ineinander greifen, oder dass Wellentäler übereinander liegender zweiter Holzelemente ineinander greifen und Wellenberge übereinander liegender zweiter Holzelemente ineinander greifen, und wobei zweite Holzelemente in der zweiten Schicht so angeordnet sind, dass diese Holzelemente zwischen sich Hohlräume ausbilden;
wobei die erste und die zweite Richtung voneinander verschieden sind.

Der Begriff *"wobei die erste und die zweite Richtung voneinander verschieden sind"* bedeutet in einer Ausführungsform auch, dass erste Holzelemente der ersten Schicht, welche zweite Holzelemente der zweiten Schicht berühren, so angeordnet sind, dass Wellentäler der einander berührenden Holzelemente nicht ineinander greifen, oder dass Wellenberge der einander berührender Holzelemente nicht ineinander greifen, oder dass Wellentäler der einander berührenden Holzelemente nicht ineinander greifen und Wellenberge der einander berührender Holzelemente nicht ineinander greifen.

Es ist aber auch durchaus möglich, dass bedingt durch das Streuverfahren ein eigentlich beispielsweise zur zweiten Schicht gehöriges Holzelement gedreht im Vergleich zu weiteren zweiten Holzelementen vorliegt und sogar die Orientierung erster Holzelemente aufweist. Im Einzelfall kann die Orientierung der Holzelemente in einer Schicht um bis zu 90° voneinander abweichen. Ein solches zweites Holzelement kann demzufolge in der gleichen Richtung wie ein erstes Holzelement angeordnet sein. Für derartige zweite Holzelemente ist dann die zweite Richtung gleich der ersten Richtung.

In einer Ausführungsform liegt der Winkel zwischen der ersten Richtung und der zweiten Richtung im Bereich von 45 und 135°. Vorzugsweise beträgt der Winkel 90°.

Die ersten Holzelemente können gleich oder verschieden von den zweiten Holzelementen sein.

Alternativ dazu betrifft die Erfindung eine Kernschicht, welche mindestens aufweist:
eine erste Schicht aufweisend übereinander angeordnete wellenförmig ausgebildete erste Holzelemente, wobei die ersten Holzelemente sich in einer ersten Richtung erstrecken; und
eine zweite Schicht aufweisend übereinander angeordnete wellenförmig ausgebildete zweite Holzelemente, wobei die zweiten Holzelemente sich in einer zweiten Richtung erstrecken;
wobei die erste und die zweite Schicht übereinander angeordnet sind und einander berühren;
wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen;
wobei wellenförmig ausgebildete zweite Holzelemente in der zweiten Schicht regellos angeordnet sind.

Wiederum können in einer Ausführungsform erste Holzelemente in der ersten Schicht so angeordnet sein, dass diese Holzelemente zwischen sich Hohlräume ausbilden.

Der Begriff *"regellos"* wird so verstanden, dass die zweiten Holzelemente ungeordnet in der zweiten Schicht angeordnet sind. Die Schicht weist Hohlräume auf.

In einer weiteren Ausführungsform weist die Kernschicht eine dritte Schicht auf, aufweisend übereinander liegende wellenförmig ausgebildete dritte Holzelemente. Diese dritten Holzelemente können sich gegebenenfalls in einer dritten Richtung erstrecken.

Diese dritten Holzelemente können gleich zu oder verschieden von den ersten und zweiten Holzelementen sein.

In einer weiteren Ausführungsform umgeben die erste Schicht und die dritte Schicht die zweite Schicht, in welcher die zweiten Holzelemente regellos angeordnet sind, Sandwich-artig, wobei in der dritten Schicht wellenförmig ausgebildete dritte Holzelemente sich in einer dritten Richtung erstrecken, wobei die dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen, wobei die erste Richtung gleich der dritten Richtung ist oder verschieden von dieser ist.

In einer bevorzugten Ausführungsform sind die dritten Holzelemente in der dritten Schicht so angeordnet, dass diese Holzelemente zumindest teilweise zwischen sich Hohlräume ausbilden.

In einer weiteren Ausführungsform umgeben die zweite Schicht, in welcher die zweiten Holzelemente regellos angeordnet sind, und die dritte Schicht die erste Schicht Sandwich-artig, wobei wellenförmig ausgebildete dritte Holzelemente in der dritten Schicht regellos angeordnet sind.

In einer Ausführungsform umgeben die erste und die dritte Schicht die zweite Schicht, in welcher die zweiten Holzelemente sich in einer zweiten Richtung erstrecken, Sandwich-artig, wobei wellenförmig ausgebildete dritte Holzelemente in der dritten Schicht regellos angeordnet sind.

In einer weiteren Ausführungsform umgeben die erste und die dritte Schicht die zweite Schicht, in welcher die zweiten Holzelemente sich in einer zweiten Richtung erstrecken, Sandwich-artig, wobei wellenförmig ausgebildete dritte Holzelemente sich in einer dritten Richtung erstrecken, wobei die dritten Holzelemente in der dritten Schicht orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen;
wobei die zweite Richtung und die dritte Richtung voneinander verschieden sind.

In einer Ausführungsform liegt der Winkel zwischen der zweiten Richtung und der dritten Richtung im Bereich von 45 und 135°. Er beträgt vorzugsweise 90°.

In einer weiteren Ausführungsform betrifft die Erfindung eine Kernschicht, welche mindestens aufweist:
eine Schicht aufweisend übereinander angeordnete wellenförmig ausgebildete Holzelemente, wobei die Holzelemente sich in einer Richtung erstrecken;
wobei die wellenförmig ausgebildeten Holzelemente in der Schicht orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen; und wobei zumindest ein Teil der Holzelemente in der Schicht so angeordnet ist, dass diese Holzelemente zwischen sich Hohlräume ausbilden.

In einer Ausführungsform verlaufen Kanten, die von den Wellentälern oder den Wellenbergen wellenförmig ausgebildeter erster, zweiter und/oder dritter Holzelemente gebildet werden, parallel zueinander.

In einer weiteren Ausführungsform weisen wellenförmig ausgebildete erste, zweite und/oder dritte Holzelemente Fasern mit einer Vorzugsrichtung auf.

Vorzugsweise ist dabei die Vorzugsrichtung der Fasern gleich der Erstreckungsrichtung des ersten, zweiten und/oder dritten Holzelements. Dabei ist die Erstreckungsrichtung gleich der Ausbreitungsrichtung der Welle im wellenförmig ausgebildeten Holzelement.

Vorzugsweise verlaufen die Kanten nicht parallel zur Vorzugsrichtung der Fasern.

Vorzugsweise verlaufen die Kanten senkrecht zur Vorzugsrichtung der Fasern. Der Begriff *"senkrecht zur Faserrichtung"* bedeutet, dass auch eine Abweichung in einem Winkel von etwa bis zu 30 ° möglich ist.

Demzufolge weisen in einer bevorzugten Ausführungsform wellenförmig ausgebildete erste, zweite und/oder dritte Holzelemente Fasern mit einer Vorzugsrichtung auf.

Die wellenförmig ausgebildeten ersten, zweiten und/oder dritten Holzelemente sind weiter durch einen Schlankheitsgrad definiert. Der Begriff *"Schlankheitsgrad"* definiert das Verhältnis von Länge zur Breite der Holzelemente.

In einer Ausführungsform weisen wellenförmig ausgebildete erste, zweite und/oder dritte Holzelemente einen Schlankheitsgrad im Bereich von 20 : 1 bis 3 : 1, vorzugsweise 20 : 1 bis 4 : 1 auf.

In einer Ausführungsform liegen die Länge im Bereich von 30 bis 200 mm, vorzugsweise 50 bis 200 mm, und die Breite im Bereich von 10 mm bis 50 mm.

Vorzugsweise liegt die Dicke eines wellenförmig ausgebildeten ersten, zweiten und/oder dritten Holzelements im Bereich von 0,2 mm bis 2 mm.

Der Begriff *"Dicke"* bedeutet die Materialstärke des ebenen Ausgangsmaterials, d. h. den kleinsten Abstand zwischen zwei Oberflächen eines wellenförmig ausgebildeten Holzelements. Diese Oberflächen sind durch die Dicke voneinander beabstandet.

In einer weiteren Ausführungsform liegt die Höhe eines ersten, zweiten und/oder dritten Holzelements im Bereich von 0,8 mm bis 8 mm.

Der Begriff *"Höhe"* ist definiert als der kürzeste Abstand zwischen zwei imaginären Ebenen, zwischen welche das wellenförmig ausgebildete erste, zweite und/oder dritte Holzelement angeordnet werden kann, derart, dass die Kanten, welche von den Wellentälern und Wellenbergen des wellenförmig ausgebildeten ersten, zweiten und/oder dritten Holzelements gebildet werden, innerhalb einer dieser Ebenen liegen.

In einer Ausführungsform weisen wellenförmig ausgebildete erste, zweite und/oder dritte Holzelemente ein Furnier oder OSB-Späne auf oder bestehen aus diesen.

In einer bevorzugten Ausführungsform sind die wellenförmig ausgebildeten Holzelemente nicht zick-zack-förmig ausgestaltet. Insbesondere bedeutet dies, dass die Kante keine scharfe Linie ist.

Die Kernschicht ist vorzugsweise ebenflächig.

### Verfahren zur Herstellung einer Kernschicht aufweisend wellenförmig angeordnete Holzelemente

Die Erfindung betrifft auch ein Verfahren zur Herstellung einer erfindungsgemäßen Kernschicht wie vorstehend definiert.

Dabei werden in einer ersten Stufe wellenförmig ausgebildete erste Holzelemente mittels einer Streuvorrichtung so gestreut, dass sie sich in einer ersten Richtung erstrecken, was auch bedeutet, dass die ersten wellenförmig ausgebildeten Holzelemente orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen.

Erfindungsgemäß weist dieses Verfahren somit mindestens die Stufe (A) auf:
(A) Streuen von wellenförmig ausgebildeten ersten Holzelementen unter Bildung der ersten Schicht mittels einer Streuvorrichtung, welche so konfiguriert ist, dass in der ersten Schicht wellenförmig ausgebildete erste Holzelemente sich in einer ersten Richtung erstrecken, wobei die ersten wellenförmig ausgebildeten Holzelemente orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen.

Daran anschließend können vorzugsweise folgende Stufen ausgeführt werden:
(B) Aufbringen einer zweiten Schicht auf die erste Schicht durch Streuen zweiter Holzelemente, wobei die zweiten Holzelemente regellos gestreut werden können, oder
   wobei die zweiten Holzelemente so gestreut werden können, dass sie sich in einer zweiten Richtung erstrecken, wobei die wellenförmig ausgebildeten zweiten Holzelemente orientiert angeordnet sind, derart, dass Wellentäler übereinander liegender zweiter Holzelemente ineinander greifen, oder dass Wellenberge übereinander liegender zweiter Holzelemente ineinander greifen, oder dass Wellentäler übereinander liegender zweiter Holzelemente ineinander greifen und Wellenberge übereinander liegender zweiter Holzelemente ineinander greifen;
(C) Aufbringen einer dritten Schicht auf die zweite Schicht durch Streuen dritter Holzelemente, wobei die dritten Holzelemente regellos gestreut werden können, oder
   wobei die dritten Holzelemente so gestreut werden können, dass sie sich in einer dritten Richtung erstrecken, wobei die wellenförmig ausgebildeten dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen.

Auch wenn die Holzelemente orientiert angeordnet sind, entstehen beim Streuen der Holzelemente Schichten, in denen die Holzelemente so angeordnet sind, dass diese zumindest teilweise Hohlräume zwischen sich ausbilden. Dies trifft selbstverständlich auch dann zu, wenn die Holzelemente regellos gestreut werden.

Ferner ist es auch möglich, zuerst die dritte Schicht auszubringen, dann auf die dritte Schicht die erste Schicht und darauf die zweite Schicht aufzubringen.

Einander berührende erste, zweite und/oder dritte Holzelemente werden in der Regel fest miteinander verbunden. Ein geeignetes Verbindungsmittel ist vorzugsweise ein Kleber. Geeignete Kleber sind im Stand der Technik bekannt.

Das feste Verbinden wird durch Anlegen von Druck erleichtert, wobei auch die erforderliche Homogenität durch die Verdichtung erreicht wird, wobei der Druck vorzugsweise in einem Bereich von 0,02 MPa bis 2,5 MPa liegt, mehr bevorzugt in einem Bereich von 0,01 bis 1,0 MPa.

Im Allgemeinen liegen mehr als 50 % der ersten, zweiten und/oder dritten Holzelemente in der Kernschicht so vor, dass sie fest miteinander verbunden, Vorzugsweise sind mehr als 60 %, oder mehr als 70 %, oder mehr als 80 %, oder mehr als 90 % oder sogar 100 % der Holzelemente in der Kernschicht so angeordnet, dass sie fest miteinander verbunden sind. Vorzugsweise sind 100 % der Holzelemente so angeordnet, dass sie fest miteinander verbunden sind. In dieser Ausführungsform weist die erfindungsgemäße Kernschicht eine höhere mechanische Stabilität im Vergleich zu einer Kernschicht auf, in welcher nicht alle Holzelemente miteinander fest verbunden sind.

Jeder der Schritte (A) bis (C) kann in Anwesenheit einer Deckschicht durchgeführt werden. Vorzugsweise wird das Verfahren dann so durchgeführt, dass die mit einem Kleber versehenen Holzelemente auf der Deckschicht gemäß Stufe (A) vorgelegt werden, wobei dann die Stufen (B) und (C) sich anschließen.

Vorzugsweise wird dann diese Anordnung von einer weiteren Deckschicht abgedeckt und verpresst. Dabei entsteht ein Mehrschichtverbund aufweisend zwei Deckschichten und eine dazwischen befindliche Kernschicht.

Kanten bzw. Holzelemente der erfindungsgemäßen Kernschicht können dadurch erzeugt werden, dass ein plättchenförmiges Holzelement aus Furnier oder OSB-Strands (OSB-Späne) oder ein Strand-förmiges Material (Span-förmiges Material), vorzugsweise Holz, gefaltet wird. Geeignete Vorrichtungen zum Falten sind aus dem Stand der Technik bekannt. Vorzugsweise kann ein plättchenförmiges Holzelement durch ein schnelllaufendes Profilwalzenpaar geleitet werden, wie in DE 42 01 201 beschrieben. Vorzugsweise erfolgt das Falten im Wesentlichen quer zur Holzfaserrichtung. In einer Ausführungsform wird dabei die zuvor durch Einwirken von Feuchtigkeit und Wärme plastifizierte Holzstruktur geknickt, d.h. an der jeweiligen Faltkante vorzugsweise durch örtliches Stauchen der Holzfasern gelenkig gestaltet. Die Faltung kann so durchgeführt werden, dass ein Zurückklappen der zick-zack-förmig angeordneten Bereiche im wellenförmig ausgebildeten Holzelement in die Ausgangslage zumindest weitgehend vermieden werden kann.

In einer weiteren Ausführungsform kann ein wellenförmiges Holzelement durch Führen eines plättchenförmigen Holzelements durch ein geeignet profiliertes Walzenpaar hergestellt werden.

In einer weiteren Ausführungsform wird die Kante hergestellt durch Schneiden. In einer Ausführungsform wird dazu ein Furnier oder ein OSB-Span mittels eines geeigneten Messers oder einer geeigneten Schneide, welche in einer wellenförmigen Art und Weise profiliert ist, geschnitten. Vorrichtungen und Verfahren sind aus dem Stand der Technik bekannt.

In einer weiteren Ausführungsform werden die Kante und das Holzelement hergestellt durch Formen wie in US 2013/0001827 beschrieben.

In einer Ausführungsform wird das Falten oder Schneiden oder Formen so durchgeführt, dass die Länge der Fasern im resultierenden Holzelement mindestens zweimal so lang ist wie die Dicke des wellenförmig ausgebildeten Holzelements.

Die durch Schneiden oder Falten erhaltenen wellenförmig ausgebildeten oder ausgeformten Elemente können weiter zerkleinert werden, falls dies erwünscht ist. Geeignete Schneidvorrichtungen sind aus dem Stand der Technik bekannt.

### Zweiter Aspekt der Erfindung:

### Erfindungsgemäße Kernschicht aufweisend Schichten mit jeweils lediglich einem wellenförmig ausgebildeten Holzelement

In einer weiteren Ausführungsform ist es auch möglich, dass sowohl die erste wie auch die zweite Schicht jeweils lediglich ein wellenförmig ausgebildetes Holzelement aufweisen, also die erste Schicht ein wellenförmig ausgebildetes erstes Holzelement, und die zweite Schicht ein wellenförmiges ausgebildetes zweites Holzelement.

Demzufolge betrifft in dieser Ausführungsform die Erfindung eine Kernschicht, welche mindestens aufweist:
eine erste Schicht aufweisend ein wellenförmig ausgebildetes erstes Holzelement, welches sich in einer ersten Richtung erstreckt; und
eine zweite Schicht aufweisend ein wellenförmig ausgebildetes zweites Holzelement, welches sich in einer zweiten Richtung erstreckt;
wobei die erste und die zweite Schicht übereinander angeordnet sind und einander berühren;
wobei die erste und die zweite Richtung voneinander verschieden sind.

In einer Ausführungsform liegt der Winkel zwischen der zweiten Richtung und der dritten Richtung im Bereich von 45 und 135°. Er beträgt vorzugsweise 90°.

In einer Ausführungsform weist die Kernschicht noch eine dritte Schicht auf, aufweisend ein wellenförmig ausgebildetes drittes Holzelement, wobei die dritte Schicht die zweite Schicht kontaktiert.

In einer Ausführungsform verlaufen Kanten, die von den Wellentälern oder den Wellenbergen wellenförmig ausgebildeter erster, zweiter und/oder dritter Holzelemente gebildet werden, parallel zueinander.

In einer weiteren Ausführungsform weisen wellenförmig ausgebildete erste, zweite und dritte Holzelemente Fasern mit einer Vorzugsrichtung auf.

Vorzugsweise ist dabei die Vorzugsrichtung der Fasern gleich der Erstreckungsrichtung des ersten, zweiten und/oder dritten Holzelements. Dabei ist die Erstreckungsrichtung gleich der Ausbreitungsrichtung der Welle.

Vorzugsweise verlaufen die von den Wellenbergen und Wellentälern gebildeten Kanten nicht parallel zur Vorzugsrichtung der Fasern.

Vorzugsweise verlaufen die Kanten senkrecht zur Vorzugsrichtung der Fasern. Der Begriff *"senkrecht zur Faserrichtung"* bedeutet, dass auch eine Abweichung in einem Winkel von etwa bis zu 30 ° möglich ist.

Die wellenförmig ausgebildeten ersten, zweiten und/oder dritten Holzelemente sind weiter durch einen Schlankheitsgrad definiert. Der Begriff *"Schlankheitsgrad"* definiert das Verhältnis von Länge zur Breite der Holzelemente.

In einer Ausführungsform weisen wellenförmig ausgebildete erste, zweite und/oder dritte Holzelemente einen Schlankheitsgrad im Bereich von 20 : 1 bis 2 : 1 auf.

In einer Ausführungsform liegen die Länge im Bereich von 200 bis 4000 mm, vorzugsweise 500 bis 2000 mm, und die Breite im Bereich von 100 mm bis 1000 mm. Das erste, zweite und/oder dritte Holzelement ist somit bahnförmig.

Vorzugsweise liegt die Dicke eines wellenförmig ausgebildeten ersten, zweiten und/oder dritten Holzelements im Bereich von 0,2 mm bis 2 mm.

Der Begriff *"Dicke"* bedeutet den kleinsten Abstand zwischen zwei Oberflächen eines wellenförmig ausgebildeten Holzelements. Diese Oberflächen sind durch die Dicke voneinander beabstandet.

In einer weiteren Ausführungsform liegt die Höhe eines ersten, zweiten und/oder dritten Holzelements im Bereich von 0,8 mm bis 8 mm.

In einer Ausführungsform weisen wellenförmig ausgebildete erste, zweite und/oder dritte Holzelemente ein Furnier oder OSB-Späne auf oder bestehen aus diesen.

In einer bevorzugten Ausführungsform sind die wellenförmig ausgebildeten Holzelemente nicht zick-zack-förmig ausgestaltet. Insbesondere bedeutet dies, dass die Kante keine scharfe Linie ist.

Die Herstellung dieser Kernschicht kann in einer Ausführungsform so erfolgen, dass das erste wellenförmig ausgebildete Holzelement, welches sich in einer ersten Richtung erstreckt, vorgelegt wird, und das zweite wellenförmig ausgebildete Holzelement, welches sich in einer zweiten Richtung erstreckt, auf das erste Element aufgebracht wird, wobei die erste Richtung von der zweiten Richtung verschieden ist.

Die Kernschicht ist vorzugsweise ebenflächig.

Vorzugsweise weisen die wellenförmigen Holzelemente OSB-Strands oder ein strand-förmiges Material auf oder bestehen aus diesem.

### Dritter Aspekt der Erfindung

### Mehrschichtverbund aufweisend eine Kernschicht wie im ersten Aspekt oder zweiten Aspekt definiert

Die Erfindung betrifft auch einen Mehrschichtverbund aufweisend die Kernschicht wie im ***ersten*** oder ***zweiten Aspekt*** definiert.

Der Begriff *"Mehrschichtverbund"* bedeutet einen Verbund aus mindestens einer Kernschicht und mindestens einer Deckschicht.

Der Begriff *"Deckschicht"* bedeutet eine Schicht eines Materials, welches vorzugsweise als Träger für die Kernschicht dient. Erfindungsgemäß ist die Deckschicht so angeordnet, dass sie die Kernschicht zumindest teilweise bedeckt, vorzugsweise vollständig, und mit dieser in fester Verbindung steht. Die Kernschicht kann auch von mindestens zwei Deckschichten zumindest teilweise bedeckt sein und mit diesen in fester Verbindung stehen. Vorzugsweise befindet sich dann die Kernschicht zwischen den beiden Deckschichten. Die Deckschicht kann aus Holz bestehen oder Holz aufweisen. Andere Materialien wie Bleche oder Kunststoffe sind gleichfalls verwendbar.

Der Begriff *"zumindest teilweise bedeckt"* schließt ein, dass die Deckschicht die Kernschicht auch vollständig überdecken oder bedecken kann.

Erfindungsgemäß weist ein Mehrschichtverbund mindestens aufweisend eine Deckschicht und eine Kernschicht auf, wobei die Deckschicht so angeordnet ist, dass sie die Kernschicht zumindest teilweise bedeckt und mit dieser in fester Verbindung steht, wobei die Kernschicht eine Kernschicht ist wie ***ersten*** oder ***zweiten Aspekt*** definiert.

Die Deckschicht kann ein Material aufweisen ausgewählt aus: Furnier, Holzplatte, Spanplatte, Faserplatte, Sperrholzplatte, Kunststoffplatte, Gipskarton, Blech, Faserzementplatte, Papier oder Pappe, und aus zwei oder mehr davon.

Der Mehrschichtverbund kann in einer Ausführungsform so hergestellt werden, dass die oben definiert Stufe (A) auf einer Deckschicht ausgeführt wird, wobei sich dann die anderen Stufen (B) und/oder (C) anschließen. Der Mehrschichtverbund kann dann durch Aufbringen einer weiteren Deckschicht nach Stufe (B) oder (C) vervollständigt werden.

Vorzugsweise ist die mindestens eine Deckschicht eben, d.h. ebenflächig.

Vorzugsweise weist die mindestens eine Deckschicht eine quadratische oder rechteckige Form auf.

Die Abmessungen der Deckschicht sind nicht limitiert. Vorzugsweise liegen die Breite und die Länge der mindestens einen Deckschicht jeweils im Bereich von 0,50 m bis 5 m, weiter bevorzugt im Bereich von 1 bis 3 m.

In einer weiteren Ausführungsform können die Deckschicht oder die Deckschichten, welche mit der Kernschicht verbunden sind, an Ort und Stelle hergestellt werden, vorausgesetzt dass die Deckschicht oder die Deckschichten aus OSB-Strands oder einem Strand-förmigen Material bestehen oder diese aufweisen.

Erfindungsgemäß weist das Verfahren auf:
(A) Streuen von OSB-Strands oder einem Strand-förmigen Material unter Bildung einer ersten Schicht mittels einer Streuvorrichtung, welche so ausgebildet ist, dass in der ersten Schicht die OSB-Strands oder das Strand-förmige Material regellos angeordnet ist;
(B) Aufbringen einer zweiten Schicht auf die erste Schicht durch Streuen von wellenförmigen Holzelementen mittels einer Streuvorrichtung, welche so ausgebildet ist, dass die Holzelemente so gestreut werden können, dass sie sich in einer Richtung erstrecken, wobei die wellenförmig ausgebildeten Holzelemente orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen, und wobei zumindest ein Teil der Holzelemente in der zweiten Schicht so angeordnet ist, dass diese Holzelemente zwischen sich Hohlräume ausbilden; und optional
(C) Aufbringen einer dritten Schicht auf die zweite Schicht durch Streuen von OSB-Spänen mittels einer Streuvorrichtung, welche so konfiguriert ist, dass in der dritten Schicht die OSB-Späne regellos angeordnet sind; und
(D) Verpressen der in den Stufen (A), (B) und der optionalen Stufe (C) gebildeten Schichten, wobei einander berührende OSB-Strands oder Strand-förmiges Material und wellenförmige Holzelemente jeweils mittels eines Klebers fest miteinander verbunden werden.

Das feste Verbinden wird durch Anlegen von Druck erleichtert, wobei auch die erforderliche Homogenität durch die Verdichtung erreicht wird, wobei der Druck vorzugsweise in einem Bereich von 0,02 MPa bis 2,5 MPa liegt, mehr bevorzugt in einem Bereich von 0,01 bis 1,0 MPa.

In den in den Stufen (A) und (C) gebildeten Schichten liegen die OSB-Strands regellos nebeneinander und übereinander vor.

### Vierter Aspekt der Erfindung

### Druckverformte Kernschicht oder druckverformter Mehrschichtverbund

Die Erfindung betrifft auch eine Kernschicht und einen Mehrschichtverbund enthaltend die Kernschicht, welche nicht ebenflächig sind.

In einer Ausführungsform können die erfindungsgemäße Kernschicht gemäß des ***ersten Aspekts*** oder des ***zweiten Aspekts*** und der erfindungsgemäße Mehrschichtverbund gemäß des ***dritten Aspekts*** einem Schritt der Druckverformung unterworfen werden, wobei dreidimensionale Objekte hergestellt werden können. Dazu kann die erfindungsgemäße Kernschicht oder der erfindungsgemäße Mehrschichtverbund in einem geeigneten Presswerkzeug verformt werden. Diese Verformung kann während der Herstellung der Kernschicht oder des Mehrschichtverbunds wie auch im Anschluss daran erfolgen.

In einer Ausführungsform werden lediglich die Kanten der Kernschicht oder des Mehrschichtverbunds verformt, vorzugsweise durch Komprimieren. Damit ist es möglich, die Hohlräume an den Kanten der Kernschicht oder des Mehrschichtverbunds abzudichten. Dieses Druckverformen kann durchgeführt werden während des Zusammenfügens der Kernschichten oder des Mehrschichtverbunds, jedoch auch im Anschluss an das Zusammenfügen der Kernschichten oder des Mehrschichtverbunds in einer nachgeschalteten Stufe, beispielsweise durch thermisches Erweichen des Klebers an den Kanten. Diese Ausführungsform hat den Vorteil, dass ein Versiegeln der Kanten, beispielsweise durch Aufbringen eines Holzstreifens, vorzugsweise eines Furnierstreifens, weggelassen werden kann.

Beim Komprimieren ergibt sich die Möglichkeit, den Randteil der Kernschicht oder des Mehrschichtverbunds mit einem balligen Profil, also einem gerundeten Profil, zu versehen. Dies ist z.B. bei hochwertigen Möbelbauteilen häufig wünschenswert.

In einer weiteren Ausführungsform können nicht nur der Kantenbereich sondern zusätzlich oder getrennt vom Kantenbereich auch weitere Bereiche der Kernschicht oder des Mehrschichtverbunds druckverformt werden.

Ein Verfahren zur Herstellung dreidimensionaler Holzgegenstände durch Druckverformung wird in der DE 101 24 912 beschrieben.

Demzufolge betrifft die Erfindung auch eine verformte Kernschicht, herstellbar nach einem Verfahren, welches zumindest die Stufe (X) aufweist:
(X) Druckverformen der Kernschicht wie im ***ersten*** oder ***zweiten Aspekt*** definiert.

Des Weiteren betrifft die Erfindung auch einen verformten Mehrschichtverbund, mindestens aufweisend eine Deckschicht und eine Kernschicht, wobei die Deckschicht so angeordnet ist, dass sie die Kernschicht zumindest teilweise bedeckt und mit dieser in fester Verbindung steht, wobei die Kernschicht eine Kernschicht ist wie im ersten oder zweiten Aspekt definiert; herstellbar nach einem Verfahren, welches zumindest die Stufe (Y) aufweist:
(Y) Druckverformen des Mehrschichtverbunds wie im ***dritten Aspekt*** definiert.

### Fünfter Aspekt der Erfindung

### Verwendungen

Gemäß eines ***fünften Aspekts*** betrifft die Erfindung ferner die Verwendung der erfindungsgemäßen Kernschicht oder des erfindungsgemäßen Mehrschichtverbunds, der verformt oder nichtverformt sein kann.

Vorzugsweise können der erfindungsgemäße Mehrschichtverbund oder die erfindungsgemäße Kernschicht in Anwendungen eingesetzt werden, welche eine hohe mechanische Beanspruchung bei relativ niedrigem Gewicht ermöglicht, und/oder welche ein hohes Dämpfungsvermögen erfordern. In einer Ausführungsform wird der Mehrschichtverbund oder die Kernschicht bei der Möbelherstellung verwendet, für Regale, für Verpackungen für den Transport, bei Innenausbauten, in Türen und Toren, in oder als Stühle, sowie im Fahrzeug- und Schiffsbau. Dazu kann der Mehrschichtverbund bzw. die Kernschicht durch Schneiden, Sägen, Feilen und/oder Bohren nach bekannten Verfahren bearbeitet werden.

Die erfindungsgemäße Kernschicht und ein Mehrschichtverbund, welcher die erfindungsgemäße Kernschicht aufweist, beispielsweise eine Leichtbauplatte, weisen eine hohe Druckfestigkeit auf. Diesbezüglich sind die erfindungsgemäße Kernschicht und der daraus hergestellte erfindungsgemäße Mehrschichtverbund den entsprechenden Kernschichten bzw. Mehrschichtverbunden überlegen, die aus industriellem Abfall aus Spänen und Faserplatten hergestellt werden. Zusätzlich können Dimensionsänderungen in der Kernschicht bzw. dem Mehrschichtverbund unter dem Einfluss von Feuchtigkeit, insbesondere Dimensionsänderungen in Richtung der Dicke der Kernschicht oder des Mehrschichtverbunds, vernachlässigbar sein aufgrund der vernachlässigbaren Dimensionsänderungen der Holzelemente in Faserrichtung. Dies gilt insbesondere dann, wenn die Faserrichtung in Richtung der mindestens zwei aneinander grenzenden plättchenförmigen Bereiche und senkrecht zu den Kanten verläuft, welche von den aneinander grenzenden Bereichen gebildet werden Dies ist ein weiterer Vorteil gegenüber anderen bekannten Kernschichten und daraus hergestellte Mehrschichtverbunden, wie sie zum Beispiel hergestellt werden aus flachen Teilchen oder aus Schichten, die mit parallelen Fasern hergestellt werden, beispielsweise wie Sperrholz oder Faserplatten.

Ohne an eine Theorie gebunden zu sein wird angenommen, dass die angesprochenen Vorteile aus der Struktur der in der Kernschicht und dem Mehrschichtverbund verwendeten wellenförmig ausgebildeten Holzelemente resultieren, wobei die besagte Kante vorzugsweise nicht parallel zur Faserrichtung des Holzelementes verläuft, sondern vorzugsweise senkrecht dazu. Dann wird die Struktur des Holzelementes immer noch durch die Holzfasern unterstützt, insbesondere an besagter Kante.

Zusätzlich finden Befestigungsmittel wie Nägel und Schrauben oder Möbelverbinder in der erfindungsgemäßen Kernschicht und dem erfindungsgemäßen Mehrschichtverbundes einen zuverlässigen Halt, da die Struktur der Kernschicht bei vergleichsweise geringer Dichte lediglich kleine Hohlräume aufweist, also eine hohe Homogenität besitzt. Damit kann auch eine stabile Befestigung an einem Träger, beispielsweise an einer Wand, erreicht werden.

Demzufolge betrifft die Erfindung auch die Verwendung
einer Kernschicht wie im ***ersten*** oder ***zweiten Aspekt*** definiert; oder
eines Mehrschichtverbunds wie im ***dritten Aspekt*** definiert; oder
einer druckverformten Kernschicht oder eines druckverformten Mehrschichtverbunds wie im ***vierten Aspekt*** definiert;
bei der Möbelherstellung, für Regale, für Verpackungen für den Transport, für Innenausbauten, in Türen und Toren, sowie im Fahrzeug- und Schiffsbau.

## Patentansprüche

1. Kernschicht, welche mindestens aufweist:
eine Schicht aufweisend übereinander angeordnete wellenförmig ausgebildete Holzelemente, wobei die Holzelemente sich in einer Richtung erstrecken;
wobei die wellenförmig ausgebildeten Holzelemente in der Schicht orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen; und wobei zumindest ein Teil der Holzelemente in der Schicht so angeordnet ist, dass diese Holzelemente zwischen sich Hohlräume ausbilden.

2. Kernschicht nach Anspruch 1, welche mindestens aufweist:
eine erste Schicht aufweisend übereinander angeordnete wellenförmig ausgebildete erste Holzelemente, wobei die ersten Holzelemente sich in einer ersten Richtung erstrecken; und
eine zweite Schicht aufweisend übereinander angeordnete wellenförmig ausgebildete zweite Holzelemente, wobei die zweiten Holzelemente sich in einer zweiten Richtung erstrecken;
wobei die erste und die zweite Schicht übereinander angeordnet sind und einander berühren;
wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen, und wobei zumindest ein Teil der ersten Holzelemente in der ersten Schicht so angeordnet ist, dass diese Holzelemente zwischen sich Hohlräume ausbilden;
wobei wellenförmig ausgebildete zweite Holzelemente in der zweiten Schicht orientiert angeordnet sind, derart, dass Wellentäler übereinander liegender zweiter Holzelemente ineinander greifen, oder dass Wellenberge übereinander liegender zweiter Holzelemente ineinander greifen, oder dass Wellentäler übereinander liegender zweiter Holzelemente ineinander greifen und Wellenberge übereinander liegender zweiter Holzelemente ineinander greifen, und wobei zumindest ein Teil der zweiten Holzelemente in der zweiten Schicht so angeordnet ist, dass diese Holzelemente zwischen sich Hohlräume ausbilden;
wobei die erste und die zweite Richtung voneinander verschieden sind.

3. Kernschicht nach Anspruch 1, welche mindestens aufweist:
eine erste Schicht aufweisend übereinander angeordnete wellenförmig ausgebildete erste Holzelemente, wobei die ersten Holzelemente sich in einer ersten Richtung erstrecken; und
eine zweite Schicht aufweisend übereinander angeordnete wellenförmig ausgebildete zweite Holzelemente;
wobei die erste und die zweite Schicht übereinander angeordnet sind und einander berühren;
wobei wellenförmig ausgebildete erste Holzelemente in der ersten Schicht orientiert angeordnet sind, derart, dass Wellentäler übereinander liegender erster Holzelemente ineinander greifen, oder dass Wellenberge übereinander liegender erster Holzelemente ineinander greifen, oder dass Wellentäler übereinander liegender erster Holzelemente ineinander greifen und Wellenberge übereinander liegender erster Holzelemente ineinander greifen, und wobei zumindest ein Teil der ersten Holzelemente in der ersten Schicht so angeordnet ist, dass diese Holzelemente zwischen sich Hohlräume ausbilden;
wobei wellenförmig ausgebildete zweite Holzelemente in der zweiten Schicht regellos angeordnet sind.

4. Kernschicht nach Anspruch 2 oder 3, aufweisend eine dritte Schicht aufweisend übereinander liegende wellenförmig ausgebildete dritte Holzelemente.

5. Kernschicht nach Anspruch 3 und 4, wobei die erste Schicht und die dritte Schicht die zweite Schicht Sandwich-artig umgeben, wobei in der dritten Schicht wellenförmig ausgebildete dritte Holzelemente sich in einer dritten Richtung erstrecken, und wobei die dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen, und wobei zumindest ein Teil der dritten Holzelemente in der dritten Schicht so angeordnet ist, dass diese Holzelemente zwischen sich Hohlräume ausbilden;
wobei die erste Richtung gleich der dritten Richtung ist oder von dieser verschieden ist; oder
Kernschicht nach Anspruch 3 und 4, wobei die zweite Schicht und die dritte Schicht die erste Schicht Sandwich-artig umgeben, wobei wellenförmig ausgebildete dritte Holzelemente in der dritten Schicht regellos angeordnet sind.

6. Kernschicht nach Anspruch 2 und 4, wobei die erste und die dritte Schicht die zweite Schicht Sandwich-artig umgeben, wobei wellenförmig ausgebildete dritte Holzelemente in der dritten Schicht regellos angeordnet sind;oder
Kernschicht nach Anspruch 2 und 4, wobei die erste und die dritte Schicht die zweite Schicht Sandwich-artig umgeben, wobei wellenförmig ausgebildete dritte Holzelemente in der dritten Schicht sich in einer dritten Richtung erstrecken, wobei die dritten Holzelemente orientiert angeordnet sind, derart, dass Wellentäler übereinander liegender dritter Holzelemente ineinander greifen, oder dass Wellenberge übereinander liegender dritter Holzelemente ineinander greifen, oder dass Wellentäler übereinander liegender dritter Holzelemente ineinander greifen und Wellenberge übereinander liegender dritter Holzelemente ineinander greifen, und wobei zumindest ein Teil der dritten Holzelemente in der dritten Schicht so angeordnet ist, dass diese Holzelemente zwischen sich Hohlräume ausbilden;
wobei die zweite Richtung und die dritte Richtung voneinander verschieden sind.

7. Kernschicht, welche mindestens aufweist:
eine erste Schicht aufweisend lediglich ein erstes wellenförmig ausgebildetes Holzelement, welches sich in einer ersten Richtung erstreckt; und
eine zweite Schicht aufweisend lediglich ein zweites wellenförmig ausgebildetes Holzelement, welches sich in einer zweiten Richtung erstreckt;
wobei die erste und die zweite Schicht übereinander angeordnet sind und einander berühren;
wobei die erste und die zweite Richtung voneinander verschieden sind; und
wobei die wellenförmig ausgebildeten Holzelemente OSB-Strands oder ein Strand-förmiges Material aufweisen oder aus diesen/diesem bestehen.

8. Kernschicht nach einem der vorstehenden Ansprüche, wobei wellenförmig ausgebildete erste, zweite und/oder dritte Holzelemente Fasern mit einer Vorzugsrichtung aufweisen.

9. Kernschicht nach Anspruch 8, wobei die Vorzugsrichtung der Fasern gleich der Erstreckungsrichtung des ersten, zweiten und/oder dritten Holzelements ist.

10. Kernschicht nach einem der Ansprüche 8 oder 9, wobei die Kanten des ersten, zweiten und/oder dritten Holzelements nicht parallel zur Vorzugsrichtung verlaufen; oder wobei die Kanten des ersten, zweiten und/oder dritten Holzelements senkrecht zur Vorzugsrichtung verlaufen.

11. Kernschicht nach einem der Ansprüche 1-6 und 8-10, soweit diese nicht von Anspruch 7 abhängig sind, wobei wellenförmig ausgebildete Holzelemente ein Furnier oder OSB-Strands oder ein Strand-förmiges Material aufweisen oder aus diesen bestehen.

12. Mehrschichtverbund, mindestens aufweisend eine Deckschicht und eine Kernschicht, wobei die Deckschicht so angeordnet ist, dass sie die Kernschicht zumindest teilweise bedeckt und mit dieser in fester Verbindung steht, wobei die Kernschicht eine Kernschicht ist wie in einem der Ansprüche 1 bis 11 definiert, vorzugsweise wobei die Deckschicht ein Material aufweist ausgewählt aus: Furnier, Holzplatte, Spanplatte, Faserplatte, Sperrholzplatte, Kunststoffplatte, Gipskarton, Blech, Faserzementplatte, Papier oder Pappe, und aus zwei oder mehr davon.

13. Verfahren zur Herstellung eines Mehrschichtverbunds aufweisend eine Kernschicht nach einem der Ansprüche 1-6, 8-11 und mindestens eine Deckschicht, aufweisend die Stufen (A), (B), optional (C), und die Stufe (D):
(A) Streuen von OSB-Strands oder eines Strand-förmigen Materials unter Bildung einer ersten Schicht mittels einer Streuvorrichtung, welche so konfiguriert ist, dass in der ersten Schicht die OSB-Strands oder das Strand-förmige Material regellos angeordnet sind;
(B) Aufbringen einer zweiten Schicht auf die erste Schicht durch Streuen von wellenförmigen Holzelementen mittels einer Streuvorrichtung, welche so ausgebildet ist, dass die Holzelemente so gestreut werden können, dass sie sich in einer Richtung erstrecken, wobei die wellenförmig ausgebildeten Holzelemente orientiert angeordnet sind, derart, dass Wellentäler übereinander liegender Holzelemente ineinander greifen, oder dass Wellenberge übereinander liegender Holzelemente ineinander greifen, oder dass Wellentäler übereinander liegender Holzelemente ineinander greifen und Wellenberge übereinander liegender Holzelemente ineinander greifen, und wobei zumindest ein Teil der Holzelemente in der zweiten Schicht so angeordnet ist, dass diese Holzelemente zwischen sich Hohlräume ausbilden; und optional
(C) Aufbringen einer dritten Schicht auf die zweite Schicht durch Streuen von OSB-Strands oder eines Strand-förmigen Materials mittels einer Streuvorrichtung, welche so ausgebildet ist, dass in der dritten Schicht die OSB-Späne regellos angeordnet sind; und
(D) Verpressen der in den Stufen (A), (B) und der optionalen Stufe (C) gebildeten Schichten, wobei einander berührende OSB-Strands oder Strand-förmiges Material und wellenförmige Holzelemente jeweils mittels eines Klebers fest miteinander verbunden werden.

14. Verformte Kernschicht, herstellbar nach einem Verfahren, welches zumindest die Stufe (X) aufweist:
(X) Druckverformen der Kernschicht nach einem der Ansprüche 1 bis 11;
oder
verformter Mehrschichtverbund, mindestens aufweisend eine Deckschicht und eine Kernschicht, wobei die Deckschicht so angeordnet ist, dass sie die Kernschicht zumindest teilweise bedeckt und mit dieser in fester Verbindung steht, herstellbar nach einem Verfahren, welches zumindest die Stufe (Y) aufweist:
(Y) Druckverformen des Mehrschichtverbunds nach Anspruch 12 oder des Mehrschichtverbunds hergestellt nach Anspruch 13.

15. Verwendung
einer Kernschicht nach einem der Ansprüche 1 bis 11;
oder eines Mehrschichtverbunds nach Anspruch 12;
oder eines Mehrschichtverbunds hergestellt nach Anspruch 13;
oder einer verformten Kernschicht oder eines verformten Mehrschichtverbunds nach Anspruch 14;
bei der Möbelherstellung, für Regale, für Verpackungen für den Transport, für Innenausbauten, in Türen und Toren, sowie im Fahrzeug- und Schiffsbau.

## Claims

1. Core layer, which comprises at least:
a layer comprising wave-shaped wooden elements arranged one above the other, the wooden elements extending in one direction;
wherein the wave-shaped wooden elements are arranged in the layer in an oriented manner such that wave troughs of wooden elements lying one above the other interlock, or that wave crests of wooden elements lying one above the other interlock, or that wave troughs of wooden elements lying one above the other interlock and wave crests of wooden elements lying one above the other interlock; and wherein at least a part of the wooden elements in the layer is arranged in such a manner that these wooden elements form cavities between them.

2. Core layer according to claim 1, which comprises at least:
a first layer comprising wave-shaped first wooden elements arranged one above the other, the first wooden elements extending in a first direction;
and a second layer comprising wave-shaped second wooden elements arranged one above the other, the second wooden elements extending in a second direction;
wherein the first and the second layer are arranged one above the other and touch one another;
wherein wave-shaped first wooden elements in the first layer are arranged in an oriented manner such that wave troughs of first wooden elements lying one above the other interlock, or that wave crests of first wooden elements lying one above the other interlock, or that wave troughs of first wooden elements lying one above the other interlock and wave crests of first wooden elements lying one above the other interlock, and wherein at least a part of the first wooden elements is arranged in the first layer in such a manner that these wooden elements form cavities between them;
wherein wave-shaped second wooden elements are arranged in the second layer in an oriented manner such that wave troughs of second wooden elements lying one above the other interlock, or that wave crests of second wooden elements lying one above the other interlock, or that wave troughs of second wooden elements lying one above the other interlock and wave crests of second wooden elements lying one above the other interlock, and wherein at least a part of the second wooden elements is arranged in the second layer in such a manner that these wooden elements form cavities between them; wherein the first and second directions are different from each other.

3. The core layer according to claim 1, which comprises at least:
a first layer comprising wave-shaped first wooden elements arranged one above the other, the first wooden elements extending in a first direction; and
a second layer comprising wave-shaped second wooden elements arranged one above the other;
wherein the first and the second layer are arranged one above the other and touch one another;
wherein wave-shaped first wooden elements in the first layer are arranged in an oriented manner such that wave troughs of first wooden elements lying one above the other interlock, or that wave peaks of first wooden elements lying one above the other interlock, or that troughs of first wooden elements lying one above the other interlock and wave crests of first wooden elements lying one above the other interlock, and wherein at least a part of the first wooden elements is arranged in the first layer in such a manner that these wooden elements form cavities between them;
wherein wave-shaped second wooden elements are arranged randomly in the second layer.

4. Core layer according to claim 2 or 3, comprising a third layer comprising wave-shaped third wooden elements lying one above the other.

5. Core layer according to claim 3 and 4, wherein the first layer and the third layer surround the second layer in a sandwich-like manner, with third wooden elements formed in the third layer extending in a third direction and with the third wooden elements arranged in an oriented manner such that wave troughs of third wooden elements lying one above the other interlock, or that wave crests of third wooden elements lying one above the other interlock, or that wave troughs of third wooden elements lying one above the other interlock and that wave crests of the third wooden elements lying one above the other interlock, and at least a part of the third wooden elements is arranged in the third layer in such a manner that these wooden elements form cavities between them;
wherein the first direction is the same as or different from the third direction; or
core layer according to claims 3 and 4, the second layer and the third layer surround the first layer in a sandwich-like manner, wherein third wave-shaped wooden elements being arranged randomly in the third layer.

6. Core layer according to claim 2 and 4, wherein the first and the third layer surround the second layer in a sandwich-like manner, wherein wave-shaped third wooden elements are arranged randomly in the third layer; or
core layer according to claim 2 and 4, wherein the first and the third layer surround the second layer in a sandwich-like manner, with wave-shaped third wooden elements in the third layer extending in a third direction, the third wooden elements being arranged in an oriented manner such that wave troughs of the third wooden elements lying one above the other interlock, or that wave crests of third wooden elements lying one above the other interlock, or that wave troughs of third wooden elements lying one above the other interlock and wave crests of third wooden elements lying one above the other interlock, and at least a part of the third wooden elements in the third layer is arranged in such a manner that these wooden elements form cavities between them;
wherein the second direction and the third direction are different from each other.

7. Core layer, which comprises at least:
a first layer comprising only one first wave-shaped wooden element which extends in a first direction; and
a second layer comprising only one second wave-shaped wooden element which extends in a second direction;
wherein the first and the second layer are arranged one above the other and touch one another;
wherein the first and second directions are different from one another; and
wherein the wave-shaped wooden elements comprise OSB-strands or a strand-shaped material or consist of this/these.

8. Core layer according to one of the preceding claims, wherein wave-shaped first, second and/or third wooden elements comprise fibers with a preferred direction.

9. Core layer according to claim 8, wherein the preferred direction of the fibers is the same as the direction of extension of the first, second and/or third wood element.

10. Core layer according to one of claims 8 or 9, wherein the edges of the first, second and/or third wooden element do not run in parallel to the preferred direction; or wherein the edges of the first, second and/or third wooden element run perpendicularly to the preferred direction.

11. Core layer according to one of claims 1 to 6 and 8 to 10 as far as same do not depend on claim 7, wherein wave-shaped wooden elements comprise a veneer or OSB-strands or a strand-shaped material or consist of these.

12. Multi-layer composite, at least comprising a cover layer and a core layer, the cover layer being arranged in such a manner that it at least partially covers the core layer and is fixedly connected to it, the core layer being a core layer as defined in one of claims 1 to 11, preferably wherein the cover layer comprises a material selected from: veneer, wood board, chipboard, fiber board, plywood board, plastic board, plasterboard, sheet metal, fiber cement board, paper or cardboard, and two or more thereof.

13. Method for producing a multilayer composite comprising a core layer according to one of claims 1 to 6 and 8 to 11, and at least one cover layer, comprising the stages (A), (B), optionally (C), and the stage (D):
(A) distributing OSB-strands or a strand-shaped material to form a first layer by means of a distributing device which is configured such that the OSB-strands or the strand-shaped material are randomly arranged in the first layer;
(B) applying a second layer to the first layer by distributing wave-shaped wooden elements by means of a distributing device which is configured such that the wooden elements can be distributed in such a manner that they extend in one direction, the wave-shaped wooden elements being arranged in an oriented manner such that wave troughs of wooden elements lying one above the other interlock, or that wave crests of wooden elements lying one above the other interlock, or that wave troughs of wooden elements lying one above the other interlock and wave crests of wooden elements lying one above the other interlock, and at least a part of the wooden elements in the second layer is arranged in such a manner that that these wooden elements form cavities between them; and optional
(C) applying a third layer to the second layer by distributing OSB-strands or a strand-shaped material by means of a distributing device which is configured such that the OSB-strands are arranged randomly in the third layer; and
(D) pressing the layers formed in steps (A), (B) and the optional step (C), wherein OSB-strands or strand-shaped material and wave-shaped wooden elements touching one another are fixedly connected to one another by means of an adhesive, respectively.

14. Deformed core layer, producible by a process which comprises at least stage (X):
(X) deforming by compression the core layer according to any one of claims 1 to 11;
or
deformed multilayer composite, comprising at least a cover layer and a core layer, the cover layer being arranged in such a manner that it at least partially covers the core layer and is fixedly connected to it, producible by a method which comprises at least step (Y):
(Y) deforming by compression the multilayer composite according to claim 12 or the multilayer composite produced according to claim 13.

15. Use
of a core layer according to any one of claims 1 to 11;
or of a multilayer composite according to claim 12;
or of a multilayer composite produced according to claim 13;
or of a deformed core layer or a of deformed multilayer composite according to claim 14;
in furniture production, for shelves, for packaging for transport, for interior fittings, in doors and gates, as well as in vehicle and shipbuilding.

## Revendications

1. Couche centrale, qui comprend au moins :
une couche présentant des éléments en bois conçus sous forme ondulée, disposés les uns sur les autres, les éléments en bois s'étendant dans une direction ;
les éléments en bois conçus sous forme ondulée étant disposés orientés dans la couche de sorte que des creux d'ondulation interpénètrent des éléments en bois résidant les uns sur les autres ou que des sommets d'ondulation interpénètrent des éléments en bois résidant les uns sur les autres ou que des creux d'ondulation interpénètrent des éléments en bois résidant les uns sur les autres et que des sommets d'ondulation interpénètrent des éléments en bois résidant les uns sur les autres ; et au moins une partie des éléments en bois étant disposée dans la couche de telle sorte que ces éléments en bois forment entre eux des cavités.

2. Couche centrale selon la revendication 1, qui comprend au moins :
une première couche présentant des premiers éléments en bois conçus sous forme ondulée, disposés les uns sur les autres, les premiers éléments en bois s'étendant dans une première direction ; et
une deuxième couche présentant des deuxièmes éléments en bois conçus sous forme ondulée, disposés les uns sur les autres, les deuxièmes éléments en bois s'étendant dans une deuxième direction ;
les première et deuxième couches étant disposées les unes sur les autres et se touchant ;
les premiers éléments en bois conçus sous forme ondulée étant disposés orientés dans la première couche de sorte que des creux d'ondulation interpénètrent des premiers éléments en bois résidant les uns sur les autres, ou que des sommets d'ondulation interpénètrent des premiers éléments en bois résidant les uns sur les autres ou que des creux d'ondulation interpénètrent des premiers éléments en bois résidant les uns sur les autres et que des sommets d'ondulation interpénètrent des premiers éléments en bois résidant les uns sur les autres, et au moins une partie des premiers éléments en bois étant disposée dans la première couche de telle sorte que ces éléments en bois forment entre eux des cavités ;
les deuxièmes éléments en bois conçus sous forme ondulée étant disposés orientés dans la deuxième couche de sorte que des creux d'ondulation interpénètrent des deuxièmes éléments en bois résidant les uns sur les autres, ou que des sommets d'ondulation interpénètrent des deuxièmes éléments en bois résidant les uns sur les autres ou que des creux d'ondulation interpénètrent des deuxièmes éléments en bois résidant les uns sur les autres et que des sommets d'ondulation interpénètrent des deuxièmes éléments en bois résidant les uns sur les autres, et au moins une partie des deuxièmes éléments en bois étant disposée dans la deuxième couche de telle sorte que ces éléments en bois forment entre eux des cavités ;
les première et deuxième directions étant différentes l'une de l'autre.

3. Couche centrale selon la revendication 1, qui comprend au moins :
une première couche présentant des premiers éléments en bois conçus sous forme ondulée, disposés les uns sur les autres, les premiers éléments en bois s'étendant dans une première direction ; et
une deuxième couche présentant des deuxièmes éléments en bois conçus sous forme ondulée, disposés les uns sur les autres ;
les première et deuxième couches étant disposées les unes sur les autres et se touchant ;
des premiers éléments en bois conçus sous forme ondulée étant disposés orientés dans la première couche de telle sorte que des creux d'ondulation interpénètrent des premiers éléments en bois résidant les uns sur les autres, ou que des sommets d'ondulation interpénètrent des premiers éléments en bois résidant les uns sur les autres ou que des creux d'ondulation interpénètrent des premiers éléments en bois résidant les uns sur les autres et que des sommets d'ondulation interpénètrent des premiers éléments en bois résidant les uns sur les autres, et au moins une partie des premiers éléments en bois étant disposée dans la première couche de telle sorte que ces éléments en bois forment entre eux des cavités ;
des deuxièmes éléments en bois conçus sous forme ondulée étant disposés dans la deuxième couche de façon aléatoire.

4. Couche centrale selon la revendication 2 ou 3, comportant une troisième couche présentant des troisièmes éléments en bois conçus sous forme ondulée résidant les uns sur les autres.

5. Couche centrale selon la revendication 3 et 4, dans laquelle les première et troisième couches entourent à la manière d'un sandwich la deuxième couche, des troisièmes éléments en bois conçus sous forme ondulée dans la troisième couche s'étendant dans une troisième direction, et les troisièmes éléments en bois étant disposés orientés de telle sorte que des creux d'ondulation interpénètrent des troisièmes éléments en bois résidant les uns sur les autres, ou que des sommets d'ondulation interpénètrent des troisièmes éléments en bois résidant les uns sur les autres ou que des creux d'ondulation interpénètrent des troisièmes éléments en bois résidant les uns sur les autres et que des sommets d'ondulation interpénètrent des troisièmes éléments en bois résidant les uns sur les autres, et au moins une partie des troisièmes éléments en bois étant disposée dans la troisième couche de telle sorte que ces éléments en bois forment entre eux des cavités ;
la première direction étant égale à la troisième direction ou étant différente de celle-ci ; ou
couche centrale selon la revendication 3 et 4, dans laquelle les deuxième et troisième couches entourent à la manière d'un sandwich la première couche, des troisièmes éléments en bois conçus sous forme ondulée étant disposés dans la troisième couche de façon aléatoire.

6. Couche centrale selon la revendication 2 et 4, dans laquelle les première et troisième couches entourent à la manière d'un sandwich la deuxième couche, des troisièmes éléments en bois conçus sous forme ondulée étant disposés dans la troisième couche de façon aléatoire ; ou
couche centrale selon la revendication 2 et 4, dans laquelle les première et troisième couches entourent à la manière d'un sandwich la deuxième couche, des troisièmes éléments en bois conçus sous forme ondulée dans la troisième couche s'étendant dans une troisième direction, les troisièmes éléments en bois étant disposés orientés de telle sorte que des creux d'ondulation interpénètrent des troisièmes éléments en bois résidant les uns sur les autres, ou que des sommets d'ondulation interpénètrent des troisièmes éléments en bois résidant les uns sur les autres ou que des creux d'ondulation interpénètrent des troisièmes éléments en bois résidant les uns sur les autres et que des sommets d'ondulation interpénètrent des troisièmes éléments en bois résidant les uns sur les autres, et au moins une partie des troisièmes éléments en bois étant disposée dans la troisième couche de telle sorte que ces éléments en bois forment entre eux des cavités ;
la première direction et la troisième direction étant différentes l'une de l'autre.

7. Couche centrale, qui comprend au moins :
une première couche présentant uniquement un premier élément en bois conçu sous forme ondulée, qui s'étend dans une première direction ; et
une deuxième couche présentant uniquement un deuxième élément en bois conçu sous forme ondulée qui s'étend dans une deuxième direction ;
les première et deuxième couches étant disposées l'une sur l'autre et se touchant;
les première et deuxième directions étant différentes l'une de l'autre ; et
les éléments en bois conçus sous forme ondulée étant des lamelles OSB ou comprenant un matériau en forme de lamelle ou s'en composant.

8. Couche centrale selon l'une des revendications précédentes, dans laquelle des premier, deuxième et/ou troisième éléments en bois conçus sous forme ondulée présentent des fibres ayant une direction préférentielle.

9. Couche centrale selon la revendication 8, dans laquelle la direction préférentielle des fibres est identique à la direction d'extension des premier, deuxième et/ou troisième éléments en bois.

10. Couche centrale selon l'une des revendications 8 ou 9, dans laquelle les bords des premier, deuxième et/ou troisième éléments en bois ne sont pas parallèles à la direction préférentielle ; ou les bords des premier, deuxième et/ou troisième éléments en bois sont perpendiculaires à la direction préférentielle.

11. Couche centrale selon l'une des revendications 1 à 6 et 8 à 10, dans la mesure où celles-ci ne sont pas dépendantes de la revendication 7, dans laquelle des éléments en bois conçus sous forme ondulée présentent un placage ou des lamelles OSB ou un matériau en forme de lamelle ou s'en composent.

12. Composite multicouche, comprenant au moins une couche de recouvrement et une couche centrale, la couche de recouvrement étant disposée de sorte qu'elle recouvre au moins partiellement la couche centrale et soit en liaison solide avec celle-ci, la couche centrale étant une couche centrale telle que définie dans l'une des revendications 1 à 11, la couche de recouvrement comprenant de préférence un matériau choisi parmi : un placage, une plaque de bois, une plaque d'aggloméré, une plaque de fibres, une plaque de stratifié, une plaque de plastique, une plaque de plâtre, une tôle, une plaque de fibrociment, un papier ou un carton, et parmi deux ou plus de ceux-ci.

13. Procédé de fabrication d'un composite multicouche présentant une couche centrale selon l'une des revendications 1 à 6, 8 à 11, et au moins une couche de recouvrement, présentant les étapes (A), (B), éventuellement (C), et l'étape (D) consistant à :
(A) disperser des lamelles OSB ou un matériau en forme de lamelle en formant une première couche au moyen d'un dispositif de dispersion, qui est conçu de manière à ce que les lamelles OSB ou le matériau en forme de lamelle soient disposés de façon aléatoire dans la première couche ;
(B) déposer une deuxième couche sur la première couche par dispersion d'éléments en bois de forme ondulée au moyen d'un dispositif de dispersion, qui est conçu de manière à pouvoir disperser les éléments en bois de sorte que ceux-ci s'étendent dans une direction, les éléments en bois conçus sous forme ondulée étant disposés orientés de telle sorte que des creux d'ondulation interpénètrent des éléments en bois résidant les uns sur les autres, ou que des sommets d'ondulation interpénètrent des éléments en bois résidant les uns sur les autres ou que des creux d'ondulation interpénètrent des éléments en bois résidant les uns sur les autres et que des sommets d'ondulation interpénètrent des éléments en bois résidant les uns sur les autres, et au moins une partie des éléments en bois étant disposée dans la deuxième couche de telle sorte que ces éléments en bois forment entre eux des cavités ; et éventuellement
(C) déposer une troisième couche sur la deuxième couche par dispersion de lamelles OSB ou d'un matériau en forme de lamelle au moyen d'un dispositif de dispersion qui est conçu de telle sorte que les copeaux OSB soient disposés de façon aléatoire dans la troisième couche ; et
(D) compresser les couches formées aux étapes (A), (B) et à l'étape éventuelle (C), des lamelles OSB se touchant ou un matériau en forme de lamelle et des éléments en bois de forme ondulée étant reliés solidement les uns aux autres au moyen d'une colle.

14. Couche centrale façonnée, pouvant être fabriquée selon un procédé qui comprend au moins l'étape (X) consistant à :
(X) façonner sous pression la couche centrale selon l'une des revendications 1 à 11 ;
ou
composite multicouche façonné, présentant au moins une couche de recouvrement et une couche centrale, la couche de recouvrement étant disposée de telle sorte que la couche centrale soit au moins partiellement recouverte et soit en liaison solide avec celle-ci, pouvant être fabriqué d'après un procédé qui comprend au moins l'étape (Y) :
(Y) façonner sous pression le composite multicouche selon la revendication 12 ou le composite multicouche fabriqué selon la revendication 13.

15. Utilisation
d'une couche centrale selon l'une des revendications 1 à 11 ;
ou d'un composite multicouche selon la revendication 12 ;
ou d'un composite multicouche fabriqué selon la revendication 13 ;
ou d'une couche centrale façonnée ou d'un composite multicouche façonné selon la revendication 14 ;
lors de la fabrication de meubles, pour des étagères, pour des emballages pour le transport, pour des extensions intérieures, dans des portes et des portails, ainsi que dans la construction automobile et navale.
